# DEMANDE DE BREVET EUROPEEN

(11) **EP 3 889 809 A1**
(43) Date de publication de la demande: **06.10.2021**
(21) Numéro de dépôt: 21163621.2
(22) Date de dépôt: 19.03.2021
(51) Int. Cl.: G06F 21/14, H04L 29/06

(54) **PROTECTION D'UN LOGICIEL SECRET ET DE DONNÉES CONFIDENTIELLES DANS UNE ENCLAVE SÉCURISÉE**

(30) Priorité: 30.03.2020 FR 2003137
(71) Demandeur: Cosmian Tech, 75008 Paris (FR)
(72) Inventeur: GRIEDER, Bruno, 92110 Clichy (FR); GENTY, Thibaud, 75015 Paris (FR); NITULESCU, Anca, 75009 Paris (FR); SARTORI, Michele, 75013 Paris (FR)
(74) Mandataire: Dupuis-Latour, Dominique

(57) **Abrégé**

L'invention concerne un procédé de réception et d'exécution d'un logiciel secret (G) sur des données dans une enclave sécurisée d'un premier dispositif (DO). Ce procédé comprend les étapes suivantes mises en œuvre dans l'enclave sécurisée, à savoir une étape de génération d'une clé publique (B) (101), une étape de réception du logiciel secret chiffré (Gₛ) provenant d'un deuxième dispositif (AP) (104), une étape de déchiffrement du logiciel secret chiffré (Gₛ) à partir d'une clé (K;P) dépendante de la clé publique (B) (105), une étape de réception de données (106) ; et une étape d'exécution du logiciel secret (G) en utilisant les données.

## Description

La présente invention concerne une manière sûre et fiable d'exécuter un logiciel secret sur un dispositif tiers. En particulier, l'invention concerne la réception d'un logiciel secret d'un deuxième dispositif et l'exécution de ce logiciel secret sur des données dans une enclave sécurisée d'un premier dispositif de sorte que le premier dispositif ne puisse pas accéder au logiciel secret.

Du fait de la progression du numérique, les différentes industries accumulent de plus en plus de données sur leurs clients, leurs partenaires commerciaux, leurs processus internes, etc. Cependant, ils n'ont souvent pas les moyens d'utiliser et d'analyser ces données d'une manière efficace.

Par exemple, un propriétaire ou fournisseur de données peut être un hôpital qui accumule des données sur ses patients et peut vouloir faire des évaluations et statistiques sur ces données pour déduire des conclusions médicales. En général, les hôpitaux n'ont pas le savoir-faire ni les logiciels pour faire de telles évaluations. Ils ont donc besoin de faire appel à un tiers. Pour ce faire, il est nécessaire de fournir les données à ce tiers qui fera des évaluations et statistiques sur ces données en exécutant des logiciels appropriés. Selon une autre solution, le tiers peut fournir un logiciel approprié au propriétaire de données pour que celui-ci puisse réaliser lui-même les évaluations et statistiques sur ses données.

Toutefois, ces deux approches présentent des inconvénients.

Fournir des données à un tiers pose très souvent problème car ces données peuvent contenir des informations sensibles ou privées qui ne doivent pas être partagées avec un tiers. Dans certains cas, ce problème peut être résolu en rendant anonymes les données préalablement à la fourniture de ces données au tiers. Une anonymisation est possible sur des données par exemple textuelles, telles que des noms ou des adresses qui doivent être cachés. Néanmoins, cette opération d'anonymisation est coûteuse et difficile à réaliser. Elle est notamment coûteuse dans le sens où des analyses de données sont nécessaires afin d'identifier les informations sensibles puis ensuite exécuter des algorithmes d'anonymisation de ces données. Toutefois, dans certains cas, il est impossible de rendre anonyme les informations sensibles. C'est le cas, par exemple, lorsque les données se composent d'images contenant des informations sensibles.

Fournir le logiciel au propriétaire de données pose également un autre problème, à savoir que le propriétaire de données aura accès au logiciel sans qu'un contrôle sur le nombre d'exécutions de celui-ci ne puisse être réalisé et sans qu'une maîtrise de ce logiciel ne puisse être réalisée. Ainsi, un propriétaire de données pourrait distribuer facilement le logiciel à d'autres propriétaires de données ou réaliser des opérations de "rétro-ingénierie" sur ce logiciel.

Il est connu des documents US 2016/210445 et WO 97/25675 des solutions pour protéger l'accès à un logiciel, mais qui ne permettent pas de remédier à ces inconvénients.

Le but de l'invention est de remédier aux inconvénients des techniques antérieures.

Ce but est atteint par un procédé de réception et d'exécution d'un logiciel secret sur des données dans une enclave sécurisée d'un premier dispositif. Ce procédé comprend les étapes suivantes mises en œuvre dans l'enclave sécurisée :
- génération d'une clé publique ;
- réception du logiciel secret chiffré provenant d'un deuxième dispositif ;
- déchiffrement du logiciel secret chiffré à partir d'une clé dépendante de la clé publique ;
- réception de données ; et
- exécution du logiciel secret en utilisant les données.

Le procédé peut comprendre en outre les étapes suivantes mises en œuvre dans l'enclave sécurisée :
- génération d'un certificat comprenant une information relative à l'enclave sécurisée ;
- envoi du certificat vers un dispositif de confiance afin de permettre au dispositif de confiance de réaliser un contrôle de l'information relative à l'enclave sécurisée et
- l'étape de réception du logiciel secret chiffré provenant du deuxième dispositif peut alors être mise en œuvre après contrôle du certificat par le dispositif de confiance.

L'information relative à l'enclave sécurisée peut comprendre dans ce cas une information relative à la clé publique et l'étape d'envoi du certificat vers le dispositif de confiance peut alors permettre au dispositif de confiance de contrôler la génération de la clé publique dans l'enclave sécurisée.

L'information relative à l'enclave sécurisée peut aussi comprendre une empreinte relative à l'enclave sécurisée ; et l'étape d'envoi du certificat vers le dispositif de confiance peut alors permettre au dispositif de confiance de contrôler l'intégrité de l'enclave sécurisée du premier dispositif.

Le procédé peut comprendre en outre les étapes suivantes mises en œuvre dans l'enclave sécurisée :
- une étape de génération d'une valeur secrète et l'étape de génération de la clé publique est réalisée à partir de la valeur secrète ;
- une étape d'envoi de la clé publique au deuxième dispositif afin de permettre au deuxième dispositif de créer une clé symétrique dépendante de la clé publique et de chiffrer le logiciel secret avec la clé symétrique ;
- une étape de réception d'une première clé partielle provenant du deuxième dispositif ;
- une étape de génération de la clé symétrique, à partir de la première clé partielle et de la valeur secrète ; et
- l'étape de déchiffrement du logiciel secret chiffré peut alors être réalisée à partir de la clé symétrique.

Dans ce cas, l'enclave sécurisée peut comprendre une clé maître et le procédé peut alors comprendre en outre une étape de chiffrement de la clé symétrique ou de la valeur secrète mise en œuvre dans l'enclave sécurisée, à partir de la clé maître, la clé symétrique chiffrée ou la valeur secrète chiffrée étant mémorisée dans un dispositif autre que l'enclave sécurisée. L'étape de déchiffrement du logiciel secret chiffré peut alors être précédée d'une étape d'obtention de la clé symétrique chiffrée et d'une étape de déchiffrement de la clé symétrique chiffrée ou de la valeur secrète chiffrée à partir de la clé maître afin d'obtenir la clé symétrique ou la valeur secrète.

Selon une variante de réalisation, l'étape de déchiffrement du logiciel secret chiffré peut être réalisée à partir d'une clé privée d'une paire de clés asymétriques, la paire de clés asymétriques étant formée de la clé publique et de la clé privée associée.

Dans ce cas, l'enclave sécurisée peut comprendre une clé maître. Le procédé peut alors comprendre en outre une étape de chiffrement de la clé privée mise en œuvre dans l'enclave sécurisée, à partir de la clé maître, la clé privée chiffrée étant mémorisée dans un dispositif autre que l'enclave sécurisée. L'étape de déchiffrement du logiciel secret chiffré peut alors être précédée d'une étape d'obtention de la clé privée chiffrée et d'une étape de déchiffrement de la clé privée chiffrée à partir de la clé maître afin d'obtenir la clé privée.

Dans tous les cas précédents, le premier dispositif peut recevoir un environnement logiciel d'exécution et installer l'environnement logiciel d'exécution afin d'initialiser l'enclave sécurisée.

Dans ce dernier cas, l'environnement logiciel d'exécution peut être signé et le premier dispositif peut vérifier l'intégrité de l'environnement logiciel d'exécution préalablement à l'installation de l'environnement logiciel d'exécution.

L'environnement logiciel d'exécution peut provenir du deuxième dispositif ou d'un troisième dispositif.

Dans ce cas, le troisième dispositif peut être un dispositif de stockage mémorisant l'environnement logiciel d'exécution apte à être connecté directement au premier dispositif ou à être relié au premier dispositif au moyen d'un réseau de communication.

L'environnement logiciel d'exécution peut alors comprendre des mesures de contrôle d'exécution du logiciel secret.

Dans ce dernier cas, les mesures de contrôle d'exécution du logiciel secret peuvent comprendre un compteur permettant de contrôler et/ou limiter le nombre d'exécutions du logiciel secret.

Les mesures de contrôle d'exécution du logiciel secret peuvent aussi comprendre un contrôle de l'environnement matériel sur lequel est installé l'enclave sécurisée.

Dans tous les cas, le premier dispositif peut comprendre un ensemble de données et l'étape de réception de données mise en œuvre dans l'enclave sécurisée peut comprendre la réception de tout ou partie de l'ensemble de données du premier dispositif.

De manière alternative, l'étape de réception de données mise en œuvre dans l'enclave sécurisée peut comprendre la réception de données d'un dispositif autre que le premier dispositif.

L'invention a également pour objet un procédé d'exécution distante, dans une enclave sécurisée d'un premier dispositif, d'un logiciel secret sur des données d'un deuxième dispositif. Le procédé comprend les étapes suivantes mises en œuvre dans le deuxième dispositif :
- obtention d'une clé publique de l'enclave sécurisée du premier dispositif,
- chiffrement du logiciel secret à partir d'une clé dépendante de la clé publique ; et
- envoi du logiciel secret chiffré vers l'enclave sécurisée du premier dispositif pour être déchiffré et exécuté en utilisant des données dans l'enclave sécurisée.

Le procédé peut comprendre en outre une étape de réception mise en œuvre dans le deuxième dispositif, d'un résultat provenant d'un dispositif de confiance, d'un contrôle d'une information relative à l'enclave sécurisée ; l'étape d'envoi du logiciel secret chiffré peut être mise en œuvre après réception du résultat du contrôle du certificat par le dispositif de confiance.

Le procédé peut également comprendre en outre les étapes suivantes mises en œuvre dans le deuxième dispositif :
- une étape de génération d'une valeur secrète et d'une première clé partielle à partir de la valeur secrète ;
- une étape de génération d'une clé symétrique, à partir de la clé publique et de la valeur secrète ;
- l'étape de chiffrement du logiciel secret est réalisée à partir de la clé symétrique ; et
- une étape d'envoi vers l'enclave sécurisée du premier dispositif de la première clé partielle afin de permettre à l'enclave sécurisée du premier dispositif de créer une clé symétrique dépendante de la clé partielle et de déchiffrer le logiciel secret avec la clé symétrique.

Le logiciel secret peut alors être chiffré avec la clé publique afin d'être apte à être déchiffré dans l'enclave sécurisée avec une clé privée de l'enclave sécurisée.

Le procédé peut également comprendre en outre, une étape d'envoi au premier dispositif, d'un environnement logiciel d'exécution pour permettre l'initialisation de l'enclave sécurisée dans le premier dispositif.

Dans ce cas, le procédé peut comprendre en outre une étape de génération de l'environnement logiciel d'exécution ou une étape de réception de l'environnement logiciel d'exécution provenant d'un troisième dispositif.

Le procédé peut également comprendre en outre une étape de signature de l'environnement logiciel d'exécution afin de permettre au premier dispositif de vérifier l'intégrité de l'environnement logiciel d'exécution préalablement à l'installation de l'environnement logiciel d'exécution.

L'environnement logiciel d'exécution peut comprendre des mesures de contrôle d'exécution du logiciel secret.

Dans ce cas, les mesures de contrôle d'exécution du logiciel secret peuvent comprendre un compteur permettant de contrôler et/ou limiter le nombre d'exécutions du logiciel secret.

Les mesures de contrôle d'exécution du logiciel secret peuvent également comprendre un contrôle de l'environnement matériel sur lequel est installé l'enclave sécurisée.

Dans tous les cas ci-dessus, les étapes d'envoi et de réception entre le premier dispositif, le deuxième dispositif et le dispositif de confiance peuvent être réalisées au moyen d'un réseau de communication.

L'invention a également pour objet un dispositif configuré pour mettre en œuvre l'un des procédés précédemment décrit.

On va maintenant décrire des exemples de réalisation de la présente invention en référence aux figures annexées où les mêmes références désignent d'une figure à l'autre des éléments identiques ou fonctionnellement semblables :
[Fig.1] illustre un procédé de réception et d'exécution d'un logiciel secret sur des données dans une enclave sécurisée d'un premier dispositif.
[Fig.2] illustre un procédé de réception et d'exécution d'un logiciel secret sur des données dans une enclave sécurisée d'un premier dispositif en utilisant une clé symétrique pour le chiffrement du logiciel secret.
[Fig.3] illustre un procédé de réception et d'exécution d'un logiciel secret sur des données dans une enclave sécurisée d'un premier dispositif en utilisant des clés asymétriques pour le chiffrement du logiciel secret.

La présente invention concerne une manière sûre et fiable d'exécuter un logiciel secret appartenant à un fournisseur de logiciel sur un dispositif n'appartenant pas à ce fournisseur de logiciel. En particulier, l'invention concerne la réception d'un logiciel secret d'un deuxième dispositif, par exemple appartenant au fournisseur de logiciel, et l'exécution de ce logiciel secret sur des données dans une enclave sécurisée d'un premier dispositif (dispositif tiers). De la sorte, l'accès au logiciel secret est uniquement possible par l'enclave sécurisée du premier dispositif mais non en dehors de l'enclave sécurisée du premier dispositif.

Un logiciel secret peut comprendre un ou plusieurs algorithmes secrets aptes à s'exécuter sur des données. Afin de maintenir ce logiciel secret, celui-ci est chiffré avant d'être transmis à une enclave sécurisée de sorte que des tiers ne puissent pas accéder au logiciel. L'accès au logiciel comprend notamment l'exécution du logiciel ou une analyse du logiciel par exemple au moyen d'une "rétro-ingénierie".

Une enclave sécurisée est une technologie matérielle et logicielle conçue pour traiter des données en toute sécurité. L'enclave sécurisée permet l'exécution de logiciel sur des données de manière sécurisée, de sorte que même un utilisateur ayant les privilèges les plus élevés tels que ceux d'un administrateur, ne puisse pas voir ce qui se passe à l'intérieur de l'enclave sécurisée ou dans la mémoire (RAM) de l'enclave sécurisée. En d'autres termes, même une personne ayant un accès physique à l'enclave sécurisée ne peut pas accéder aux données propres à l'enclave (telles que des clés cryptographiques ou des paramètres d'exécution) ni réaliser une analyse du ou des logiciels aptes à être exécutés dans l'enclave. L'architecture matérielle de l'enclave sécurisée peut comprendre un ou plusieurs processeurs. Selon un mode de réalisation, seuls ces processeurs sont aptes à déchiffrer les données propres à l'enclave sécurisée. Le chiffrement et le déchiffrement des données propres à l'enclave sécurisée peuvent être réalisés par une clé matérielle (clé maître) V mémorisée dans l'enclave sécurisée et accessible uniquement par le ou les processeurs de l'enclave sécurisée. Selon un exemple particulier, la clé maître V est gravée sur le ou les processeurs et ne peut pas être lue par des attaques logicielles ou matérielles, sauf si le ou les processeurs sont détruits.

L'enclave sécurisée permet ainsi de recevoir un logiciel secret chiffré et des données qui sont à utiliser par ce dernier. L'enclave sécurisée peut déchiffrer le logiciel secret et l'exécuter en utilisant des données. Une telle solution permet de maintenir le logiciel secret, c'est-à-dire qu'aucune opération de "rétro-ingénierie" sur ce logiciel ne puisse être réalisée.

Un exemple d'une enclave sécurisée comprend la mise en œuvre de la technologie "Intel" (marque déposée) connue sous le nom "SGX". Cette technologie permet l'exécution sécurisée d'un logiciel (ou du code du logiciel) dans un environnement d'exécution fiable.

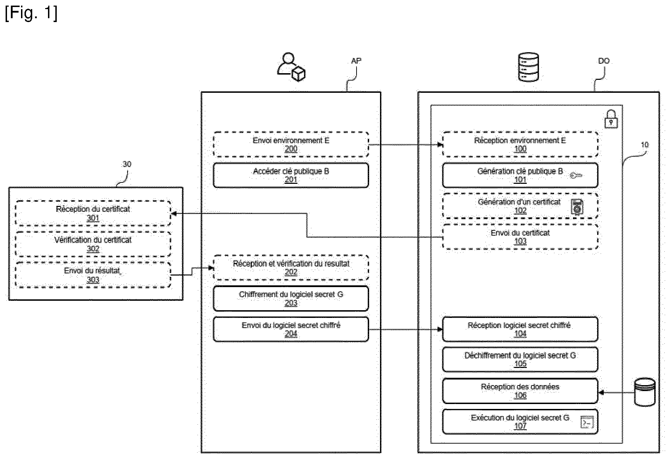

En référence aux Figures 1 à 3, il est illustré des procédés de réception et d'exécution d'un logiciel secret sur des données dans une enclave sécurisée d'un premier dispositif conformément à l'invention. Sur ces figures, les blocs en pointillés se réfèrent à des caractéristiques optionnelles qui ne sont pas indispensables à l'exécution du logiciel secret.

**Figure 1** illustre un procédé de réception et d'exécution d'un logiciel secret sur des données dans une enclave sécurisée d'un premier dispositif (dit dispositif propriétaire de données DO).

L'enclave sécurisée 10 est illustrée sur les Figures comme étant intégrée directement dans le dispositif propriétaire de données DO. Selon une variante de réalisation, l'enclave sécurisée 10 peut être connectée au dispositif propriétaire de données DO, par exemple par un bus informatique ou un réseau.

Le procédé comprend une étape 101 de génération d'une clé publique B dans l'enclave sécurisée 10. Ensuite, l'enclave sécurisée 10 peut à une étape 102, générer un certificat comprenant une information relative à l'enclave sécurisée 10. L'information relative à l'enclave sécurisée peut comprendre une information relative à la clé publique B et/ou la clé publique B et/ou une empreinte relative à l'enclave sécurisée 10 et/ou une information relative à l'environnement matériel de l'enclave sécurisée (par exemple, l'identifiant du / des processeurs).

Des tiers peuvent accéder à la clé publique B afin de chiffrer un logiciel secret G. En particulier, un deuxième dispositif (dit dispositif fournisseur de logiciel) AP peut acquérir la clé publique B (étape 201) afin de chiffrer le logiciel secret G au moyen de cette clé. La clé publique B peut être communiquée au deuxième dispositif AP par l'enclave sécurisée 10 via le dispositif propriétaire de données DO et/ou au moyen d'un autre dispositif (par exemple une infrastructure à clés publiques).

Dans le mode de réalisation dans lequel l'enclave sécurisée 10 génère un certificat, le procédé comprend une étape 103 d'envoi du certificat vers un dispositif de confiance 30 afin de permettre à ce dispositif de réaliser un contrôle de l'information relative à l'enclave sécurisée 10. Cet envoi peut être réalisé directement de l'enclave sécurisée au dispositif de confiance 30 ou par l'intermédiaire du dispositif propriétaire de données DO et/ou d'autres dispositifs et peut être réalisé au moyen d'un réseau de communication (par exemple par Internet). Le dispositif de confiance 30 reçoit le certificat dans une étape 301 et réalise un contrôle de l'information relative à l'enclave sécurisée 10 dans une étape 302.

Si l'information relative à l'enclave sécurisée comprend une information relative à la clé publique B, le dispositif de confiance 30 peut contrôler la génération de la clé publique B. Ainsi, le dispositif de confiance 30 peut vérifier et confirmer que la clé publique B a en effet été créée dans l'enclave sécurisée 10 et que l'enclave sécurisée est la seule entité (dans certains cas avec le fournisseur du logiciel AP) qui possède une clé de déchiffrement K, P dépendante de la clé publique B.

Si l'information relative à l'enclave sécurisée 10 comprend une empreinte relative à l'enclave sécurisée 10, le dispositif de confiance 30 peut contrôler l'intégrité de l'enclave sécurisée du dispositif propriétaire de données DO. Ce contrôle permet de vérifier que l'enclave sécurisée est intacte et non modifiée. Dans certains cas, le dispositif de confiance 30 peut être le constructeur, le fabricant ou le fournisseur de l'enclave sécurisée 10. Le contrôle de l'intégrité de l'enclave sécurisée peut être réalisé en utilisant des informations mémorisées dans le dispositif de confiance 30 avant la délivrance de l'enclave sécurisée à un client.

Enfin, le dispositif de confiance 30 peut communiquer le résultat du contrôle au dispositif fournisseur de logiciel AP (étape 303) afin que celui-ci puisse vérifier que l'enclave sécurisée 10 est effectivement sécurisée et que la clé publique appartient effectivement à l'enclave sécurisée.

Dans une étape 202, le dispositif fournisseur de logiciel AP peut préalablement à l'envoi du logiciel secret chiffré (ou même avant de chiffrer le logiciel secret) recevoir le résultat de contrôle du dispositif de confiance 30 et évaluer la sécurité de l'enclave sécurisée et de la clé publique B basée sur le résultat du contrôle. Si le dispositif fournisseur de logiciel AP décide que l'enclave sécurisée 10 n'est pas suffisamment sécurisée, il n'enverra pas le logiciel sécurisé chiffré Gₛ. Ce mécanisme de contrôle empêche notamment qu'une enclave sécurisée frauduleuse puisse accéder au logiciel secret en clair (non chiffré). S'il décide que l'enclave sécurisée 10 est suffisamment sécurisée, il chiffre (étape 203) et envoie (étape 204) le logiciel secret chiffré Gₛ vers l'enclave sécurisée 10 pour être déchiffré et exécuté en utilisant des données dans l'enclave sécurisée 10. Le chiffrement de l'étape 203 est réalisé en utilisant la clé publique B. L'envoi du logiciel secret chiffré Gₛ vers l'enclave sécurisée 10 (étape 204) peut être réalisé via le dispositif propriétaire de données DO et/ou via un autre dispositif connecté à l'enclave sécurisée 10.

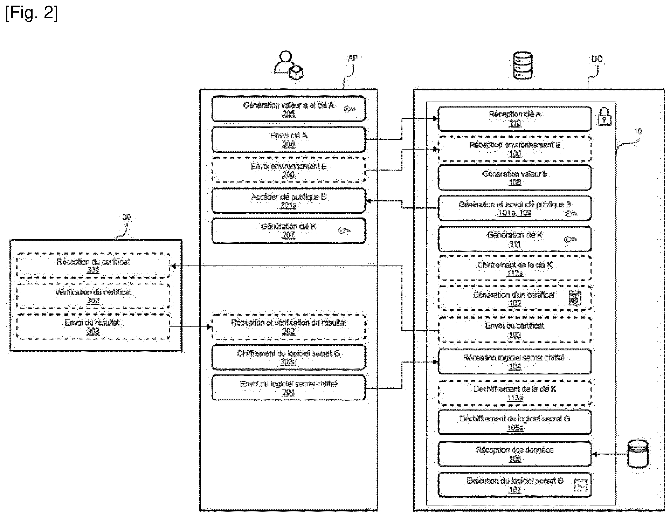

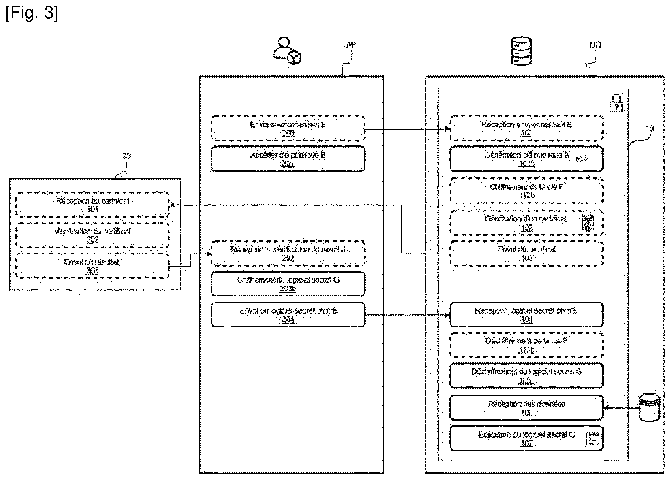

A l'étape 104, l'enclave sécurisée 10 reçoit le logiciel secret chiffré Gₛ provenant du fournisseur de logiciel AP. Après la réception du logiciel secret chiffré Gₛ, l'enclave sécurisée 10 déchiffre le logiciel secret chiffré Gₛ à partir d'une clé K, P dépendante de la clé publique B dans une étape 105. La clé de déchiffrement K, P est connue par l'enclave sécurisée 10 et non pas par le dispositif propriétaire de données DO. Différents exemples de schéma de chiffrement sont expliqués au moyen des Figures 2 et 3.

A l'étape suivante (étape 106), l'enclave sécurisée 10 reçoit des données à traiter par le logiciel secret. Les données peuvent provenir d'un ensemble de données mémorisées sur le dispositif propriétaire de données DO. Les données reçues par l'enclave sécurisée 10 peuvent contenir toutes les données de cet ensemble de données ou seulement une partie de cet ensemble. De plus ou alternativement, l'enclave sécurisée peut recevoir des données d'un dispositif autre que le dispositif propriétaire de données DO, notamment d'un dispositif distant. Dans ce dernier cas, les données peuvent être chiffrées par le dispositif distant avant d'être envoyées à l'enclave sécurisée puis déchiffrées dans l'enclave. Ce chiffrement peut être réalisé de manière similaire au chiffrement du logiciel secret, notamment au moyen de la clé publique B.

L'étape 106 est suivie de l'étape 107 au cours de laquelle le logiciel secret G est exécuté par l'enclave sécurisée 10 en utilisant les données reçues.

Les étapes décrites ci-dessus peuvent être exécutées dans un ordre différent. Par exemple, la réception des données dans l'enclave sécurisée peut être une première étape du procédé.

Selon un mode de réalisation particulier, préalablement à l'exécution du logiciel secret G dans l'enclave sécurisée 10 (étape 107), préférablement même préalablement à la génération du certificat (étape 102), le dispositif propriétaire de données DO reçoit un environnement logiciel d'exécution E et installe cet environnement logiciel d'exécution E afin d'initialiser l'enclave sécurisée 10 (étape 100). L'installation de l'environnement logiciel d'exécution E préalablement à la génération du certificat (étape 102) a l'avantage que la création de l'empreinte relative à l'enclave sécurisée 10 peut tenir compte de l'environnement logiciel d'exécution E installé. Ainsi, l'installation de l'environnement logiciel d'exécution E peut être validée par le dispositif de confiance 30.

L'environnement logiciel d'exécution E peut comprendre, outre l'environnement logiciel permettant l'initialisation de l'enclave sécurisée, des librairies nécessaires à l'exécution du logiciel secret G et/ou des paramètres spécifiques à l'exécution du logiciel G (par exemple des configurations initiales du logiciel, etc.) De plus, l'environnement logiciel d'exécution E peut comprendre des mesures de contrôle d'exécution du logiciel secret G. Ces mesures de contrôle d'exécution du logiciel secret G peuvent comprendre un compteur permettant de contrôler et/ou limiter le nombre d'exécutions du logiciel secret G. Les mesures de contrôle d'exécution du logiciel secret G peuvent aussi ou alternativement comprendre un contrôle de l'environnement matériel sur lequel est installée l'enclave sécurisée. Par exemple, les mesures de contrôle peuvent limiter les ressources utilisées pendant l'exécution du logiciel secret G, comme par exemple le nombre de processeurs et/ou la quantité de mémoire.

Selon un mode de réalisation, l'environnement logiciel d'exécution E peut être envoyé du dispositif fournisseur de logiciel AP au dispositif propriétaire de données DO (étape 200 et étape 100). Pour ce faire, l'environnement logiciel d'exécution E peut être généré par le dispositif fournisseur de logiciel AP ou par un autre dispositif et reçu par le dispositif fournisseur de logiciel AP.

Selon un autre mode de réalisation, l'environnement logiciel d'exécution E reçu par le dispositif propriétaire de données DO peut provenir d'un autre dispositif que le dispositif fournisseur de logiciel AP (étape 100). Par exemple, l'environnement logiciel d'exécution E peut provenir d'un dispositif de stockage mémorisant l'environnement logiciel d'exécution E, apte à être connecté directement au dispositif propriétaire de données DO. Ce dispositif de stockage peut être par exemple un support mémoire tel qu'une clé USB. Alternativement, l'autre dispositif peut être relié au dispositif propriétaire de données DO au moyen d'un réseau de communication.

L'environnement logiciel d'exécution E peut être signé, en général par le dispositif qui fournit l'environnement logiciel d'exécution E, par exemple par le dispositif fournisseur de logiciel AP. Ainsi, le dispositif propriétaire de données DO peut vérifier l'intégrité de l'environnement logiciel d'exécution E préalablement à l'installation de l'environnement logiciel d'exécution E.

**Figure 2** illustre un procédé de réception et d'exécution d'un logiciel secret sur des données dans une enclave sécurisée d'un premier dispositif en utilisant une clé symétrique pour le chiffrement du logiciel secret.

Il sera décrit en détail ci-après uniquement les étapes qui diffèrent de celles du procédé illustré à la Figure 1, donc les étapes liées au chiffrement et au déchiffrement. Pour le reste, il est renvoyé au procédé illustré à la Figure 1.

Le procédé basé sur l'utilisation d'une clé symétrique comprend en outre une étape 108 de génération d'une valeur secrète b. Dans ce mode de réalisation, la clé publique B (étape 101a) est générée à partir de la valeur secrète b dans l'enclave sécurisée 10. Dans ce cas, la clé publique B peut être une clé partielle. La valeur secrète b peut être une valeur aléatoire et la clé publique B peut être générée comme suit : B = g^{b}, g étant un générateur d'un groupe fini.

A l'étape 109, l'enclave sécurisée 10 peut envoyer la clé publique B au dispositif fournisseur de logiciel AP afin de permettre au dispositif fournisseur de logiciel AP de créer une clé symétrique K dépendante de la clé publique B et de chiffrer le logiciel secret G avec la clé symétrique K. La clé publique B peut être transmise de l'enclave sécurisée 10 au dispositif fournisseur de logiciel AP via d'autres dispositifs, comme des dispositifs de gestion de clés. Le dispositif fournisseur de logiciel AP accède donc à la clé publique B ou la reçoit dans une étape 201a.

Lors d'une étape 205, le dispositif fournisseur de logiciel AP peut générer une valeur secrète a et une première clé partielle A à partir de la valeur secrète a. La valeur secrète a peut être une valeur aléatoire et la clé partielle A peut être générée comme suit : A = g^{a}, g étant un générateur d'un groupe fini. Le dispositif fournisseur de logiciel AP peut ensuite envoyer la clé partielle A (étape 206) à l'enclave sécurisée afin de permettre à l'enclave sécurisée de créer la clé symétrique K dépendante de la clé partielle A et de déchiffrer le logiciel secret chiffré Gₛ avec la clé symétrique K. La clé partielle A peut être transmise du dispositif fournisseur de logiciel AP à l'enclave sécurisée 10 via d'autres dispositifs, comme des dispositifs de gestion de clés. Selon un mode de réalisation particulier, la transmission de la clé partielle A peut être réalisée simultanément à la transmission de l'environnement logiciel d'exécution E.

A l'étape 207, le dispositif fournisseur de logiciel AP peut utiliser la clé publique B reçue de l'enclave sécurisée 10 et la valeur secrète a pour générer la clé symétrique K. La génération peut être réalisée comme suit : K = B^{a}= g^{ba}, g étant un générateur d'un groupe fini.

Lors de l'étape 110, l'enclave sécurisée 10 peut recevoir la première clé partielle A provenant du dispositif fournisseur de logiciel AP.

Lors de l'étape 111, l'enclave sécurisée 10 peut générer la clé symétrique K à partir de la première clé partielle A reçue du dispositif fournisseur de logiciel AP et de la valeur secrète b. La génération peut être réalisée comme suit : K = A^{b}= g^{ab}, g étant un générateur d'un groupe fini.

Le chiffrement du logiciel secret G dans le dispositif fournisseur de logiciel AP est réalisé à partir de la clé symétrique K à l'étape 203a.

Le déchiffrement du logiciel secret chiffré Gₛ dans l'enclave sécurisée 10 peut être réalisé à partir de la clé symétrique K à l'étape 105a.

L'enclave sécurisée 10 peut aussi comprendre une clé maître V. La clé maître V peut être utilisée pour chiffrer des informations secrètes de l'enclave sécurisée 10 afin de mémoriser ces informations à l'extérieur de l'enclave sécurisée 10, par exemple sur le dispositif propriétaire de données ou sur un autre dispositif.

Ainsi, l'enclave sécurisée 10 peut aussi comprendre une étape 112a de chiffrement de la clé symétrique K ou de la valeur secrète b à partir de la clé maître V. La clé symétrique ou la valeur secrète chiffrée peut ainsi être mémorisée dans un dispositif autre que l'enclave sécurisée 10.

Dans ce cas, l'enclave sécurisée 10 doit obtenir la clé symétrique chiffrée ou la valeur secrète chiffrée pour déchiffrer la clé symétrique chiffrée ou la valeur secrète chiffrée à partir de la clé maître V dans une étape 113a et obtenir la clé symétrique K ou la valeur secrète b, préalablement au déchiffrement du logiciel secret chiffré Gs.

**Figure 3** illustre un procédé de réception et d'exécution d'un logiciel secret sur des données dans une enclave sécurisée d'un premier dispositif en utilisant des clés asymétriques pour le chiffrement du logiciel secret.

Il sera décrit en détail ci-après uniquement les étapes qui diffèrent de celles du procédé illustré à la Figure 1, donc les étapes liées au chiffrement et au déchiffrement. Pour le reste, il est renvoyé au procédé illustré à la Figure 1.

Le dispositif fournisseur de logiciel AP chiffre le logiciel secret avec la clé publique B lors de l'étape 203b afin d'être apte à être déchiffré dans l'enclave sécurisée 10 avec une clé privée P de l'enclave sécurisée 10 d'une paire de clés asymétriques. Cette paire de clés asymétriques est formée de la clé publique B et de la clé privée associée P.

L'enclave sécurisée 10 déchiffre dans une étape 105b le logiciel secret chiffré Gₛ à partir de la clé privée P.

La clé privée P peut être générée par exemple lors de l'étape 101b lors de la génération de la clé publique B. Alternativement, la clé privée P peut être une clé matérielle de l'enclave sécurisée.

Dans le mode de réalisation utilisant une paire de clés asymétriques, l'enclave sécurisée 10 peut comprendre une clé maître V et utiliser cette clé maître V pour chiffrer la clé privée P mise en œuvre dans l'enclave sécurisée dans une étape 112b. La clé privée chiffrée peut ainsi être mémorisée dans un dispositif autre que l'enclave sécurisée. Dans ce cas, l'enclave sécurisée 10 doit, avant le déchiffrement du logiciel secret chiffré Gₛ, obtenir la clé privée chiffrée et la déchiffrer à partir de la clé maître V afin d'obtenir la clé privée P (étape 113b).

Le dispositif fournisseur de données AP, le dispositif propriétaire de données DO et le dispositif de confiance 30 peuvent être des dispositifs informatiques comprenant une mémoire configurée pour stocker des instructions permettant d'exécuter les instructions illustrées aux Figures 1 à 3. De plus, ces dispositifs informatiques peuvent comprendre un ou plusieurs processeurs pour le traitement des instructions stockées en mémoire.

Le dispositif fournisseur de logiciel AP, le dispositif propriétaire de données DO et le dispositif de confiance 30 peuvent être connectés de manière communicante par l'intermédiaire d'un système de bus informatique ou par un réseau de communication filaire ou sans fil, par exemple par Internet. 1

## Revendications

1. Procédé de réception et d'exécution d'un logiciel secret (G) sur des données dans une enclave sécurisée (10) d'un premier dispositif (DO),
**caractérisé en ce qu'**il comprend les étapes suivantes mises en œuvre dans l'enclave sécurisée (10) :
- génération d'une clé publique (B) (101) ;
- réception du logiciel secret chiffré (Gₛ) provenant d'un deuxième dispositif (AP) (104) ;
- déchiffrement du logiciel secret chiffré (Gₛ) à partir d'une clé (K;P) dépendante de la clé publique (B) (105) ;
- réception de données (106) ; et
- exécution du logiciel secret (G) en utilisant les données (107).

2. Procédé selon la revendication 1, **caractérisé en ce que** le procédé comprend en outre les étapes suivantes mises en œuvre dans l'enclave sécurisée (10) :
- génération d'un certificat comprenant une information relative à l'enclave sécurisée (10) (102);
- envoi du certificat vers un dispositif de confiance (30) afin de permettre au dispositif de confiance de réaliser un contrôle de l'information relative à l'enclave sécurisée (10) (103) et
- l'étape de réception du logiciel secret chiffré (Gₛ) provenant du deuxième dispositif (AP) est mise en œuvre après contrôle du certificat par le dispositif de confiance (30) (104).

3. Procédé selon la revendication 2, **caractérisé en ce que** l'information relative à l'enclave sécurisée (10) comprend une information relative à la clé publique (B) et
l'étape d'envoi du certificat vers le dispositif de confiance (30) permet au dispositif de confiance de contrôler la génération de la clé publique (B) dans l'enclave sécurisée (10).

4. Procédé selon l'une des revendications 2 ou 3,
**caractérisé en ce que** l'information relative à l'enclave sécurisée (10) comprend une empreinte relative à l'enclave sécurisée (10) ; et
l'étape d'envoi du certificat vers le dispositif de confiance (30) permet au dispositif de confiance de contrôler l'intégrité de l'enclave sécurisée (10) du premier dispositif (DO).

5. Procédé selon la revendication 1, **caractérisé en ce que** le procédé comprend en outre les étapes suivantes mises en œuvre dans l'enclave sécurisée (10) :
- une étape de génération d'une valeur secrète (b) (108) et l'étape de génération de la clé publique (B) (101a) est réalisée à partir de la valeur secrète (b) ;
- une étape d'envoi de la clé publique (B) au deuxième dispositif (AP) (109) afin de permettre au deuxième dispositif (AP) de créer une clé symétrique (K) dépendante de la clé publique (B) et de chiffrer le logiciel secret (G) avec la clé symétrique (K) ;
- une étape de réception d'une première clé partielle (A) provenant du deuxième dispositif (AP) (110) ;
- une étape de génération de la clé symétrique (K), à partir de la première clé partielle (A) et de la valeur secrète (b) (111) ; et
- l'étape de déchiffrement du logiciel secret chiffré (Gₛ) (105a) est réalisée à partir de la clé symétrique (K).

6. Procédé selon la revendication 5, **caractérisé en ce que** l'enclave sécurisée (10) comprend une clé maître (V) et
- le procédé comprend en outre une étape de chiffrement de la clé symétrique (K) ou de la valeur secrète (b) mise en œuvre dans l'enclave sécurisée (10), à partir de la clé maître (V), la clé symétrique chiffrée ou la valeur secrète (b) chiffrée étant mémorisée dans un dispositif autre que l'enclave sécurisée (112a) et
- l'étape de déchiffrement du logiciel secret chiffré (Gₛ) est précédée d'une étape d'obtention de la clé symétrique chiffrée et d'une étape de déchiffrement de la clé symétrique chiffrée ou de la valeur secrète chiffrée à partir de la clé maître (V) afin d'obtenir la clé symétrique (K) ou la valeur secrète (b) (113a).

7. Procédé selon la revendication 1, **caractérisé en ce que** l'étape de déchiffrement du logiciel secret chiffré (Gₛ) est réalisée à partir d'une clé privée (P) d'une paire de clés asymétriques, la paire de clés asymétriques étant formée de la clé publique (B) et de la clé privée associée (P) (105b).

8. Procédé selon la revendication 7, **caractérisé en ce que** l'enclave sécurisée (10) comprend une clé maître (V) et
- le procédé comprend en outre une étape de chiffrement de la clé privée (P) mise en œuvre dans l'enclave sécurisée (10), à partir de la clé maître (V), la clé privée chiffrée étant mémorisée dans un dispositif autre que l'enclave sécurisée (112b) et
l'étape de déchiffrement du logiciel secret chiffré (Gₛ) est précédée d'une étape d'obtention de la clé privée chiffrée et d'une étape de déchiffrement de la clé privée chiffrée à partir de la clé maître (V) afin d'obtenir la clé privée (P) (113b).

9. Procédé selon la revendication 1, **caractérisé en ce que** le premier dispositif (DO) reçoit un environnement logiciel d'exécution (E) (100) et installe l'environnement logiciel d'exécution (E) afin d'initialiser l'enclave sécurisée (10).

10. Procédé selon la revendication 9, **caractérisé en ce que** l'environnement logiciel d'exécution (E) provient du deuxième dispositif (AP) ou d'un troisième dispositif.

11. Procédé selon l'une des revendications 9 ou 10, **caractérisé en ce que** l'environnement logiciel d'exécution (E) comprend des mesures de contrôle d'exécution du logiciel secret (G).

12. Procédé selon la revendication 11, **caractérisé en ce que** les mesures de contrôle d'exécution du logiciel secret (G) comprennent un compteur permettant de contrôler et/ou limiter le nombre d'exécutions du logiciel secret (G).

13. Procédé selon la revendication 1, **caractérisé en ce que** l'étape de réception de données mise en œuvre dans l'enclave sécurisée (10) comprend la réception de données d'un dispositif autre que le premier dispositif.

14. Procédé d'exécution distante, dans une enclave sécurisée (10) d'un premier dispositif (DO), d'un logiciel secret (G) sur des données d'un deuxième dispositif (AP),
**caractérisé en ce qu'**il comprend les étapes suivantes mises en œuvre dans le deuxième dispositif (AP) :
- obtention d'une clé publique (B) de l'enclave sécurisée (10) du premier dispositif (DO) (201),
- chiffrement du logiciel secret (G) à partir d'une clé (K;B) dépendante de la clé publique (B) (203) ; et
- envoi du logiciel secret chiffré (Gₛ) vers l'enclave sécurisée (10) du premier dispositif (DO) pour être déchiffré et exécuté en utilisant des données dans l'enclave sécurisée (204).

15. Dispositif configuré pour mettre en œuvre le procédé selon l'une des revendications 1 à 13 ou le procédé selon la revendication 14.
